# EUROPEAN PATENT APPLICATION

(11) **EP 3 453 898 A1**
(43) Date of publication of application: **13.03.2019**
(21) Application number: 18193852.3
(22) Date of filing: 11.09.2018
(51) Int. Cl.: F16B 13/02, F16B 15/06, E01F 15/04, E01F 9/685

(54) **BOLT FOR ROAD BARRIER**

(30) Priority: 11.09.2017 IT 201700101463; 11.09.2017 SM 201700426
(71) Applicant: Ticopter SA, 6982 Agno (CH)
(72) Inventor: MONTELEONE, Mauro, 6982 Cassina d'Agno (CH); BURZI, Caterina, 12064 La Morra (Cuneo) (IT)
(74) Representative: Galassi, Alessandro

(57) **Abstract**

Bolt comprising a three-dimensional body substantially extended along a first direction defined on a first axis (X), having at least one side wall (401), a tip portion (405) adapted in use to first contact the ground or road surface and a head portion (402), axially opposite to said tip portion, wherein in correspondence of said side wall (401), in an intermediate position between said head portion (402) and said tip portion (405), there is a retention flap for extraction (406), said retention flap for extraction (406) extending outside the profile of said at least one side wall (401) and being inclined with respect to the latter with an obtuse angle with respect to said first direction; said retention flap for extraction (406) exerting a counter-action on the ground if said bolt (400) is subjected to an extraction force from said ground or road surface.

## Description

### Field of the invention

The present invention relates in general to the field of fastening devices for elements adapted to be used in roads, and in detail it relates to a bolt for road barrier.

### Prior art.

It is known that various devices located in the proximity of roads are fixed on the road surface or in relative proximity thereof by making trenches or holes which are filled with concrete and within which piles or supports are fixed. The presence of a solid union with the road surface is particularly important for elements such as traffic lights or signs, which are subject to the lever action that the wind creates with respect to the ground, as well as to elements such as delimitation barriers of vehicle traffic, the latter having to bear considerable shocks without moving from the position in which they are installed.

With regard to road barriers, the tests currently in force, at least on the Italian territory, imply resistance to the impact of vehicles weighing more than 10t, launched at speeds that can reach 80km/h or 100km/h in the case of cars.

The applicant has found that the construction of trenches filled with concrete entails a considerable expenditure of time and economic resources, in particular since it is necessary to allow the concrete to solidify for a stable fixing. The solidification period of concrete varies and can be delayed by environmental phenomena such as rain or snow.

Therefore, the object of the present invention is to obtain a bolt for road barriers or more generally for elements installed in a fixed position on a road or in the substantial proximity thereof, which solves the aforementioned drawbacks.

### Summary of the invention

The bolt of the present invention advantageously allows obtaining a sturdy fixing to the road surface for the elements to which it is associated, without at the same time causing the waste of resources typical of trench constructions or concrete-filled trenches.

The bolt object of the present invention comprises a three-dimensional body mainly extended along a first direction defined on a first axis, having at least one side wall, a tip portion adapted in use to first contact the ground or road surface and a head portion, axially opposite to said tip portion, wherein in correspondence of said side wall, in an intermediate position between said head portion and said tip portion, there is a retention flap for extraction, said retention flap for extraction extending outside the profile of said at least one side wall.

According to a first aspect of the invention, the retention flap is inclined with respect to the latter, in particular with an obtuse angle with respect to said first direction.

According to one aspect of the invention, said retention flap is inclined with respect to said first direction with an obtuse angle measured between said retention flap and an external portion of the side wall facing the tip portion.

According to a third aspect of the invention, said flap exerts and/or is configured to exert a contrast action with the ground or road surface if said bolt is subjected to an extraction force from said ground or road surface and/or when the bolt is subjected to an extraction, in particular axial and/or along the first direction or first axis, from the ground or road surface.

According to a fourth aspect of the present invention, said retention flap for extraction is made by means of a notch of part of said at least one side wall, on a curved profile or having a plurality of sides.

According to a further aspect, the side wall is structured and shaped so as not to deform plastically during the insertion into the ground, for example in a road surface.

According to a further aspect, the side wall is rigid or substantially rigid so as not to deform plastically during the insertion into the ground, for example in a road surface.

According to a further aspect, the area identified by a section of the bolt along a plane orthogonal to the axis X has the same size both before and after the insertion.

According to a further aspect, the overall volume of the bolt remains substantially constant and unaltered after the insertion with respect to the total volume of the bolt before the insertion.

According to a further aspect, the bolt is a structured and configured bolt for fixing road barriers or other road elements to a road or to the ground.

According to a further aspect, the bolt is a substantially non-deformable rigid spike.

According to a further aspect, the body has a length of between 40 and 90 cm, preferably between 50 and 80 cm, and even more preferably between 65 and 75 cm, for example 70 cm.

According to a further aspect, the side walls have a thickness of between 4.5mm and 7mm, preferably equal to 5mm.

According to a further aspect, the body is internally hollow.

According to a further aspect of the present invention, said bolt object of the present invention is made of metal material, in particular steel or iron.

Preferably, although not limitedly, the obtuse angle is between 115° and 135° and, more preferably, it is equal to 120°.

Preferably, although not limitedly, said bolt is made with a box-like profile, closed on three sides, each defining a first, a second and a third portion of a side wall.

According to a preferred and non-limiting aspect of the present invention, said first, second and third portions of side wall have a folded joint without angular points.

According to a further preferred and non-limiting aspect of the present invention, said bolt, in correspondence of said head portion, comprises an engagement element, in particular a U-shaped element facing downwards, in which a threaded nut and/or element is fastened having an axis coinciding with said first axis.

According to a further preferred and non-limiting aspect of the present invention, in correspondence of said head portion there is a window for accessing said nut or threaded element.

Preferably, although not limitedly, said bolt has a body having a thickness of at least 5mm.

Preferably, although not limitedly, said bolt has a body longitudinally extending by a length of more than 40cm and preferably more than 60cm.

Preferably, although not limitedly, the first, second and third side walls extend between the head portion and the tip portion.

Preferably, but not limitedly, the bolt is configured and/or adapted to be fixed without rotation.

### Description of the figures

Further features of the bolt object of the present invention will be described with reference to a preferred and non-limiting embodiment, and with the aid of the accompanying drawings, in which:

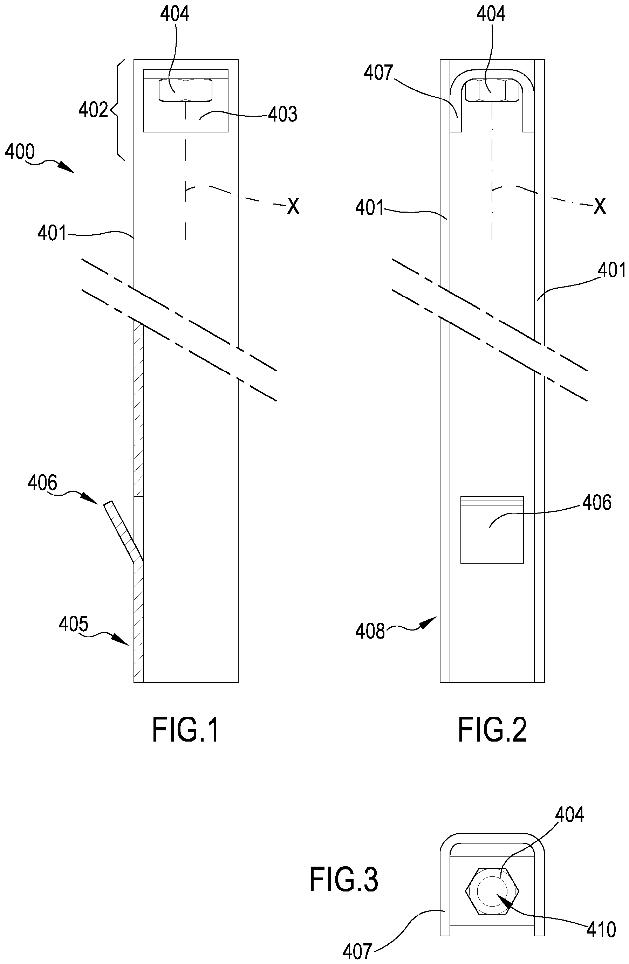

- figure 1 shows a first side view of the bolt object of the present invention;
- figure 2 shows a second side view of the bolt object of the invention; and
- figure 3 shows a plan view of the bolt object of the present invention.

### Detailed description of the invention

With reference to the accompanying figures, reference numeral 400 indicates as a whole a bolt for fixing elements adapted to be installed on or substantially in the proximity of a road. In particular, although not limitedly, the bolt 400 object of the present invention is designed to permanently fix road barriers, signs or traffic lights, without the aid of the construction of trench excavations possibly filled with concrete.

Since the forces which come into play in the sector are considerable, the bolt 400 is made entirely of metal material, preferably made of stainless steel or an alloy thereof, such as cor-ten, which is corrosion resistant. Plastic parts would not be applicable to the bolt described herein, since they are too little resistant.

In detail, the bolt 400 object of the present invention comprises a three-dimensional body mainly extending along a first direction defined on a first axis X.

The accompanying figures show a particular preferred but non-limiting embodiment in which the body of the bolt 400 has a substantially box-like structure, defined on a substantially sectional shape with an ideally square plan but closed on only three sides, each of which defines a respective side wall portion 401 which extends between a head portion 402 and a tip portion 405. The fourth open side extends without interruption between the head portion 402 and the tip portion 405. The side wall can therefore be inscribed in an ideal polygon, identified along a section plane orthogonal to the axis X, which proceeding from the head portion to the tip portion, preferably but not limitedly, has a constant size area. This, in other words, means that the main extension direction of each of the side wall portions 401 is parallel or substantially parallel to the axis X.

The tip portion 405 is opposite the head portion 402, and in use it is the first one to encounter the road surface by insertion. The applicant notes that the ideally square plan is not to be understood in a limiting manner, since the geometrical figure which better inscribes the cross-section of the body of the bolt 100 could equivalently be a rectangle. In particular, the tip portion is inserted with a linear insertion action along said first axis X. Such a box shape is not to be intended in a limiting manner, since the bolt 400 could also be made with a cylindrical section, for example, which defines a single uninterrupted side wall.

In particular, the applicant has noted that in the three-sided box shape shown in the accompanying figures, the junction of the side walls 401 occurs with a connection without angular points. This advantageously allows the body of the bolt 400 to be made by bending, without creating welds between the side walls which could compromise the mechanical strength thereof and which would in any case cause an economically and temporally burdensome processing step.

The head portion 402 is made of a substantially flat surface, adapted to allow the repeated abutment of a manual or automated hammer (pile driver), which allows the insertion of the bolt 400 into the ground or road surface without rotation with respect to said first axis X Moreover, due to the robust structure of the side wall, the latter does not deform during the insertion. The area substantially identified by a section of the bolt along a plane orthogonal to the axis X has the same size both before and after the insertion.

Since the movement of any element in substantial proximity to the road surface takes place with at least partial extraction of the means for fixing to the ground, the bolt 400 advantageously integrates means which allow exercising a constraint to the extraction from the road, in particular if the force is exerted along the axis X or with a component close thereto.

For this purpose, the applicant has designed a retention flap 406 for extraction, in an intermediate position between said head portion and said tip portion 405; said retention flap 406 for extraction extends outside the shape of said at least one side wall 401, and is inclined with respect to the latter by an obtuse angle with respect to said first direction; in other words, by observing the bolt 400 from the head portion 405, the retention flap 406 is facing backwards. The retention flap 406 preferably has a planar configuration and is also provided with an inner wall or facing the side wall and an outer wall opposite each other.

Preferably, in order to impart the correct strength to the bolt, the longitudinal extension of the body is equal to 70cm, and in any case greater than 40cm, which allows making fixings also for barriers adapted to support the impact of heavy vehicles, of mass greater than 10t, launched against containment barriers at speeds close to or above 80km/h, without extraction from the ground. The applicant also noted that the optimal ratio between strength and weight is given by side walls 401 with a thickness of 5mm, and in any case between 4.5mm and 7mm.

Preferably, although not limitedly, said flap is positioned about 5-8cm from the tip end 405 of the bolt; the applicant has found that this allows an optimal resistance of the tip in accordance with the effect of contrast to the extraction in a zone of the road surface where the compactness and mechanical strength are maximum.

Said retention flap for extraction 406 is made by a carving of part of said at least one side wall 401, on a curved profile or having a plurality of sides. In particular, the accompanying figures show an embodiment in which the carving is made on three sides on a sub-portion of the side wall 401, made two parallel to said first axis X and one orthogonal to the latter, obviously in retracted position with respect to the tip and joined with the two sides parallel to the axis X, so as to form an inverted U-shaped carving with stems directed towards the tip portion 405.

In use, said flap is first cut by known means and then subsequently forced into opening so as to assume an obtuse angle which, with respect to the direction of insertion, has a value of between 115 and 135° and, more preferably, equal to 120°. In particular, the retention flap 406 is inclined with respect to the insertion direction with an obtuse angle measured between said retention flap, and more particularly a face thereof facing outwards, and an outer portion of the side wall facing the tip portion.

The Applicant has found that the particular shape of the retention flap 406 according to the preceding description, in particular when the bolt 100 is inserted into the ground or road surface through the use of a pile driver machine, is such that this retention flap 406 opens progressively, increasing at least up to a predetermined value the angle existing between the inner wall of the same retention flap and the side wall.

At the head portion 402 there is an engagement element, in particular a U-shaped element 407, facing downwards and therefore towards the tip portion 405; within said engagement element, in particular a U-shaped element, a nut and/or threaded element 404 is fixed, with threaded hole 410 having an axis coinciding with said first axis X, and having a maneuvering hexagon. At least one of the three side walls 401 has a window 403 which advantageously allows side access to said nut and/or threaded element 404. Preferably, said engagement element, in particular a U-shaped element 407 is welded inside the box of said body, so as to achieve a stable junction. The engagement element, in particular with the threaded element 404, is configured to receive a portion of a road barrier fixing screw.

The advantages of the bolt 400 object of the present invention are clear in the light of the foregoing description. In particular, it allows implementing an element capable of permanently binding signs, traffic barriers, traffic lights, signal poles, supports for street lighting or the like without the construction of trench and concrete works. The use of the bolt object of the present invention advantageously allows implementing a support which is easy to install, but which is at the same time very difficult to extract from the ground or from the road surface, since any force action having components oriented parallel to the axis X is opposed by the edge of the side wall, which opposes the movement.

Finally, it is clear that additions, changes or variants may be made to the bolt object of the present invention which are obvious to a man skilled in the art, without departing from the scope of protection that is provided by the appended claims.

## Claims

1. Bolt comprising a three-dimensional body mainly extended along a first direction defined on a first axis (X), having at least one side wall (401), a tip portion (405) adapted in use to first contact the ground or road surface and a head portion (402), axially opposite to said tip portion, wherein in correspondence of said side wall (401), in an intermediate position between said head portion (402) and said tip portion (405), there is a retention flap for extraction (406), said retention flap for extraction (406) extending outside the profile of said at least one side wall (401) and being inclined with respect to the latter; said retention flap for extraction (406) being configured for exerting a counter-action on the ground or road surface when said bolt (400) is subjected to an extraction force from said ground or road surface.

2. Bolt (400) according to claim 1, wherein said retention flap for extraction (406) is made by a carving of part of said at least one side wall (401), on a curved profile or one having a plurality of sides and/or said retention flap (406) is inclined with respect to said first direction with an obtuse angle measured between said retention flap and an external portion of the side wall facing the tip portion.

3. Bolt (400) according to claim 1 or claim 2, wherein said body is made of steel or iron.

4. Bolt (400) according to claim 1, wherein the obtuse angle ranges from 115 to 135° and, more preferably, is equal to 120°.

5. Bolt (400) according to any one of the previous claims, wherein said body is made with a box-shaped profile, closed on three sides, each identifying a first, a second and a third side wall (401).

6. Bolt (400) according to claim 5, wherein said first, second and third side walls have a junction folded without angular points.

7. Bolt according to claim 6, wherein at said head portion, there is an engagement element, in particular a U-shaped element (407) facing downwards, in which a threaded nut and/or element (404) is fastened having an axis coinciding with said first axis (X).

8. Bolt (400) according to claim 7, wherein at said head portion (402) there is a window for accessing said threaded nut or element.

9. Bolt (400) according to claim 1, wherein said at least one side wall has a thickness not lower than 4.5mm.

10. Bolt (400) according to any one of the previous claims, wherein said body extends longitudinally by a length of over 40cm and preferably over 60cm.

11. Bolt (400) according to any one of the previous claims, adapted to be fixed without rotation.

12. Bolt (400) according to any one of the preceding claims, wherein each of the side walls extends between the head portion (402) and the tip portion (405).
